Europäisches Patentamt

European Patent Office

Office européen des brevets

(11) Publication number: **0 396 260**
**A2**

(12) **EUROPEAN PATENT APPLICATION**

(21) Application number: **90303624.2**

(22) Date of filing: **04.04.90**

(51) Int. Cl.⁵: **A23F 5/32, A23F 5/46**

(30) Priority: **05.05.89 US 348320**

(43) Date of publication of application:
**07.11.90 Bulletin 90/45**

(84) Designated Contracting States:
**AT BE CH DE DK ES FR GB IT LI LU NL SE**

(71) Applicant: **GENERAL FOODS FRANCE S.A.**
**6, Rue Lionel Terray**
**F-92504 Rueil Malmaison(FR)**

(72) Inventor: **Lanty, François**
**5 Rue de la Paix**
**F-77500 Chelles(FR)**

(74) Representative: **Eyles, Christopher Thomas et al**
**W.P. THOMPSON & CO. High Holborn House**
**52-54 High Holborn**
**London WC1V 6RY(GB)**

(54) **Process & product for preparing a flavored instant coffee extract by freeze-drying.**

(57) A process is described for preparing an improved flavored instant coffee by freeze-drying.

## PROCESS & PRODUCT FOR PREPARING A FLAVORED INSTANT COFFEE EXTRACT BY FREEZE-DRYING

This invention concerns a process for preparing a flavored instant coffee extract by freeze-drying.

By flavored instant coffee extract we mean, in the sense of the present request, the so-called "instant" coffees, containing a flavor (for example: orange, chocolate, chocolate mint, vanilla, butterscotch, nut, among others) and possibly milk, a cream extract, a sweetener, vitamins and other products with a food value, as these additives may be present in a quantity representing approximately 0.1 to 15% in weight of the flavored coffee extract.

Such compositions are experiencing great success with consumers. They are commonly prepared by mixing the various ingredients in powder form. Such compositions generally have the disadvantage of not being homogenous, particularly when the degree of flavoring is weak or when the components greatly vary in density. Moreover, the aspect and color of these heterogenous mixtures are not appealing.

In studying compositions of this type, the Applicant established the fact that it was possible to correct these drawbacks by mixing, in the form of a liquid mixture or an emulsion, liquid (preferably pre-concentrated) coffee and a liquid flavoring mixture of an emulsion of the flavoring ingredient (or ingredients), then freeze-drying this mixture by known procedures.

In the finished product, therefore, the flavoring ingredients are closely mixed into the instant coffee, at the very heart of the solid particles and are no longer in distinct form.

Consequently, by this invention a process for preparing an instant extract of flavored coffee is described by freeze-drying characterized in that coffee in liquid form, with at least one flavor extract which is thoroughly mixed in the coffee or the flavor extract is emulsified by use of an emulsifying agent and thoroughly mixed with the coffee product; then the expansion of this emulsion or mixture is obtained in the presence of an inert gas by freezing; this product is frozen, reduced in particle size while frozen to the desired particle size of the finished product; then the crushed product, obtained in this manner, is dehydrated by known freeze-drying processes.

The initial liquid coffee will be advantageously pre-concentrated and the flavoring in liquid or emulsion form will be added to it, and in many instances with almost equal amounts of dry coffee extract and flavoring.

The expansion phase will take place in a manner already known per se, by injecting nitrogen into the mixture, in order to freeze it in an expanded form and to obtain finished products presenting a consistent mass in volume, regardless of the volume masses of the ingredients utilized.

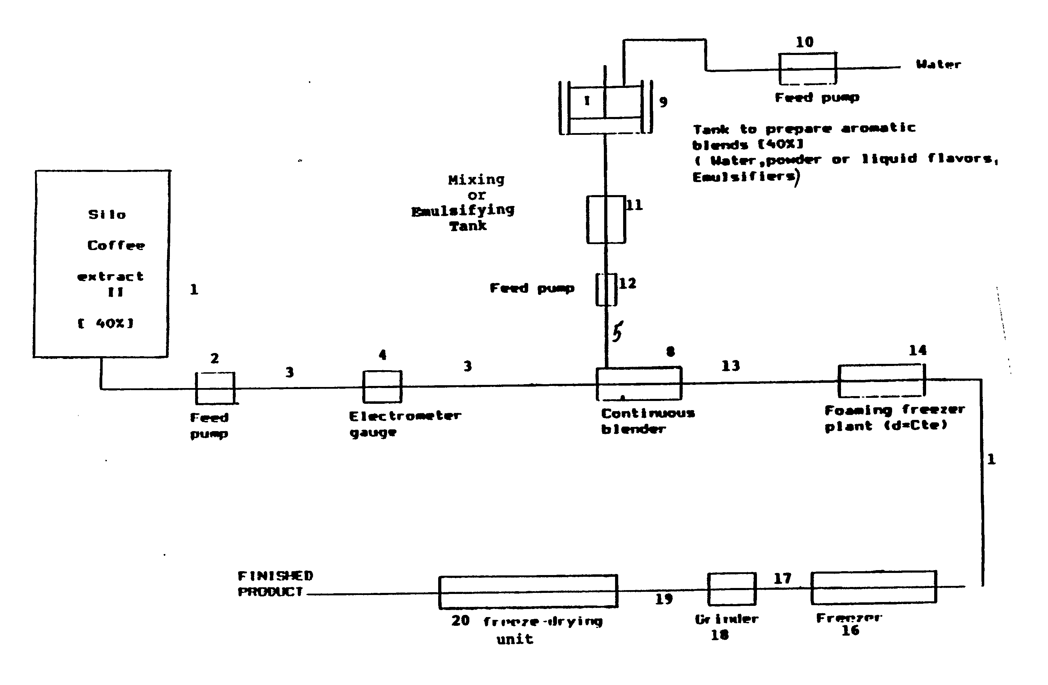

A manner of implementing the invention will be described below, as an example, with reference to the sole diagram in the appended figure.

Referring to the accompanying figure, from the storage tank (1), a pump (2) and an electrometer gauge (4) supplies line (3) with about 85 to about 99.9% by weight of a coffee containing about 30 to about 45% coffee solids (preferably about 35 to about 42%) of its weight to continuous blender (8). The continuous blender (8) is supplied from mixing tank (9) which contains a mixture of water, liquid or powder flavors or emulsifiers if required. The water supplied to the mixing tank (9) is supplied by a feed pump (10). The materials of the mixing tank (9) are thoroughly mixed or emulsified in a tank (11) and fed by a pump (12) through line (5) to the continous blender (8). The amount of edible emulsified flavor(s) extract is present in amount of about 0.1 to about 15 weight percent of the total coffee drink. The mixed material of continous blender (8) is passed through line (13) to the foaming freezer plant (14) where an inert gas, preferably nitrogen is injected and the mixture partially frozen. The partially frozen mixture is poured through line (15) to the freezing chamber (16) which has a temperature lowered to approximately -40C° to completely freeze the product. The frozen product in chamber (16) is passed through line (17) into a grinder (18) to reduce the size of the particles to the final particle size desired in the finished product and especially wherein at least 90% of the particles are retained on a 40 mesh (U.S. Standard Sieve) and up to 5% to 10% are retained on a 6 mesh screen and passed through line (19) and freeze-dried in the freeze-drying chamber (20) to a moisture level below about 3% and more was preferably below about 2%. The resulting product is the flavored instant coffee product. The most desirable product is one having a density in the range from about 0.220 to about 0.245 grams/cc. This product can only be produced in a freeze-drying process and a desirable product will not be produced if instead of freeze-drying, a spray-drying process is used. The spray-drying procedure would remove the flavors and the more physical mixture of flavor with the coffee base is not sufficient to provide a homogenous product.

In the event of solid flavoring which dissolves in water (chocolate, vanilla, butterscotch, etc.) these are dissolved in the mixer (9) with the help of the water brought in through the feed pump (10). This water will be at a temperature of 10 to 15° C, in view of enabling proper dissolving, to achieve a dry extract content which is equal to that of the coffee concentrate.

When flavor extracts are utilized in liquid form (the case, for example, for nut flavoring), these can be utilized without adding water, if their dry extract content is almost equal to that of the coffee concentrate, with a ±5% variation in weight, or if the added flavor does not modify in a noticeable manner, i.e., by more than ±2%, the dry extract content in the coffee concentrate. If necessary, one or several solids can be added to the liquid flavoring to adjust its dry extract contents, for example the same flavoring in solid form, freeze-dried coffee, maltose, dextrin or other food products.

Flavors which do not dissolve in water (orange flavoring for example) can also be utilized. In this case, they are mixed into the emulsifying agent in the mixing tank (11), then emulsified. The type of emulsifying agents which can be used herein are any edible emulsifiers which will emulsify the flavor extract. Some of the emulsifiers which can be used include hydrophilic emulsifiers such as lecithin and the like and hydrophilic emulsifiers such as glyceryl mono-oleate and the like or combinations thereof.

The following Examples concern different versions of instant flavored coffee extracts prepared using the foregoing process. In each of these Examples, we give the composition of the flavored mixture introduced through the line (5) into the continuous mixer (8), the composition of the mixture and/or emulsion which leaves this mixer (8) through the line (13) and the composition of the instant flavored coffee extract evacuated from the freeze-drying chamber (20). In all the Examples, the percentages provided refer to weight.

| EXAMPLE 1 | |
|---|---|
| This Example concerns the preparation of an instant butterscotch flavored coffee extract. | |
| composition of the flavored mixture | % |
| - butterscotch flavoring in instant powdered form<br>- water<br>Dry extract contents: 40% | 40<br>60 |
| composition of the flavored coffee emulsion | |
| - coffee concentrate with 40% dry extract<br>- flavored mixture with 40% dry extract | 88.89<br>11.11 |
| composition of the instant flavored coffee extract | |
| - coffee<br>- butterscotch flavor | 88.89<br>11.11 |

3

| EXAMPLE 2 | |
|---|---|
| This Example concerns the preparation of an instant vanilla-flavored coffee extract. | |
| composition of the flavored mixture | % |
| - vanilla flavoring in instant powder form<br>- water | 40<br>60 |
| composition of the coffee and flavoring emulsion | |
| - coffee concentrate with 40% dry extract<br>- flavored mixture with 40% dry extract | 95.41<br>4.59 |
| composition of the flavored instant coffee extract | |
| - coffee<br>- vanilla flavor | 95.41<br>4.59 |

| EXAMPLE 3 | |
|---|---|
| This Example concerns the preparation of an instant chocolate mint flavored coffee extract. | |
| composition flavor in instant powder form | % |
| - chocolate flavor in instant powder form<br>- mint flavor in instant powder form | 39.47<br>0.53 |
| composition of the coffee and flavor emulsion | |
| - coffee concentrate with 40% dry extract<br>- flavored mixture with 40% dry extract | 88.75<br>11.25 |
| composition of the instant flavored coffee extract | |
| - coffee<br>- chocolate flavor<br>- mint flavor | 88.75<br>11.10<br>0.15 |

| EXAMPLE 4 | |
|---|---|
| This Example concerns the preparation of a dry chocolate-flavored coffee extract. | |
| composition of the flavored mixture | % |
| - chocolate flavor in instant powder form<br>- water<br>Dry extract contents: 40% | 40.00<br>60.00 |
| composition of the coffee and flavoring emulsion | |
| - coffee concentrate with 40% dry extract<br>- flavored mixture with 40% dry extract | 88.89<br>11.11 |
| composition of the instant flavored coffee extract | |
| - coffee<br>- chocolate flavor | 88.89<br>11.11 |

| EXAMPLE 5 | |
|---|---|
| This Example concerns the preparation of an instant nut-flavored coffee extract. | |
| composition of the flavoring mixture | % |
| - liquid nut flavoring<br>Dry extract contents: 35%<br>composition of the coffee and flavoring emulsion<br>- coffee concentrate with 40% dry extract<br>- flavored composition | 100<br><br><br>94.54<br>5.46 |
| composition of the instant flavored coffee extract | |
| - coffee<br>- nut flavoring | 95.19<br>4.81 |

One will note that, in all the foregoing compositions, it is possible to precisely adjust the flavor content of the instant flavored coffee extract and that this content can be relatively low.

| · EXAMPLE 6 | |
| --- | --- |
| This Example concerns the preparation of an instant orange-flavored coffee extract. | |
| composition of the flavoring mixture | % |
| - orange flavoring<br>- gum arabic<br>- water<br>Dry substances content: 29% | 8.50<br>20.50<br>71.00 |
| composition of the coffee and flavoring emulsion | |
| - coffee concentrate with 40% dry substances<br>- flavoring emulsion with 29% dry substances | 94.53<br>0.47 |
| composition of the instant flavored coffee extract | |
| - coffee<br>- gum arabic<br>- orange flavoring | 99.66<br>0.24<br>0.10 |

## Claims

1. A process for preparing a homogeneous flavored instant coffee extract which comprises blending about 85 to about 99.9 by weight of a preconcentrated liquid aqueous coffee extract containing about 30 to about 45 weight percent coffee solids and about 0.1 to about 15 weight percent of edible emulsified or soluble flavor(s) extract; freezing said blend; reducing the particle size of said frozen blend to the final particle size desired in the finished product; and freeze-drying said frozen particles to dryness by reducing the water content below 3.

2. The process of claim 1, wherein the water content of the freeze-dried particles is below 2%.

3. The process of claim 1 or claim 2, wherein the density of the finished product is from about 0.220 to about 0.245 gram/cc.

4. The process of any one of claims 1 to 3, wherein an inert gas is injected in the initial freezing step to provide expansion of the product.

5. The process of claim 4, wherein the inert gas is nitrogen.

6. The process of any one of claims 1 to 5, wherein the preconcentrated liquid aqueous coffee extract contained about 35 to about 42 weight percent coffee solids.

7. The process of any one of claims 1 to 6, wherein the size of the freeze-dried particles and at least 90% of the particles are retained on a 40 mesh (U.S. Standard Sieve) and up to 5% to 10% are retained on a 6 mesh screen.

8. The process of any one of claims 1 to 7, wherein the flavor is butterscotch, vanilla, chocolate mint, nut flavoring, or orange.

Silo  
Coffee  
extract  
II  
[ 40% ]

1

Mixing  
or  
Emulsifying  
Tank

10  
Water  
Feed pump

I 9

Tank to prepare aromatic  
blends [40%]  
( Water, powder or liquid flavors,  
Emulsifiers)

11

Feed pump 12

2  
Feed  
pump

3

4  
Electrometer  
gauge

3

8  
Continuous  
blender

13

14  
Foaming freezer  
plant (d=Cte)

1

FINISHED  
PRODUCT

20 freeze-drying  
unit

19

17  
Grinder  
18

Freezer  
16

EP 0 396 260 A2